# EUROPÄISCHE PATENTSCHRIFT

(11) **EP 3 351 895 B1**
(45) Veröffentlichungstag und Bekanntmachung des Hinweises auf die Patenterteilung: **04.05.2022**
(21) Anmeldenummer: 18151445.6
(22) Anmeldetag: 12.01.2018
(51) Int. Cl.: G01B 21/04, G01B 11/02, G01B 5/008

(54) **MESSVORRICHTUNG UND VERFAHREN ZUM BETREIBEN EINER MESSVORRICHTUNG**
MEASURING DEVICE AND METHOD FOR OPERATING A MEASURING DEVICE
APPAREIL DE MESURE ET PROCÉDÉ POUR OPÉRER UN APPAREIL DE MESURE

(30) Priorität: 19.01.2017 DE 102017100992
(43) Veröffentlichungstag der Anmeldung: 25.07.2018
(73) Patentinhaber: CARL MAHR HOLDING GMBH, 37073 Göttingen (DE)
(72) Erfinder: Ziegenbein, Rainer, 37124 Rosdorf (DE)
(74) Vertreter: Rüger Abel Patentanwälte PartGmbB

(56) Entgegenhaltungen:
- EP-A2- 1 236 972
- WO-A2-2009/135447
- US-A1- 2009 271 996

## Beschreibung

Die Erfindung betrifft eine Messvorrichtung und ein Verfahren zum Betreiben einer Messvorrichtung. Die Messvorrichtung weist zwei Tasteinheiten mit jeweils einem berührend tastenden Tastelement auf. Solche Tastelemente werden bei Messvorrichtungen zur Erfassung einer Längenmessgröße verwendet. Beim Berühren eines Werkstücks mit dem Tastelement kann anhand der Position des Tastelements gegenüber einer definierten Ausgangs- bzw. Nulllage ein Längenmesswert am Werkstück ermittelt werden.

US 2009/0271996 A1 offenbart ein Verfahren zum Kalibrieren eines portablen Koordinatenmesssystems mit einem Gelenkarm unter Verwendung eines kalibrierten stationären Koordinatenmesssystems. Eine Tastkugel des stationären Koordinatenmesssystems wird in mehrere definierte Positionen gefahren, die gegenüber einem Koordinatensystem des stationären Koordinatenmesssystems bekannt sind. In diesen Positionen wird die Tastkugel des stationären Koordinatenmesssystems durch die Tastkugel des portablen Koordinatenmesssystems mehrmals angetastet. Dadurch kann die Position des Gelenkarms mit der Tastkugel des portablen Koordinatenmesssystems gegenüber dem Koordinatensystem des kalibrierten stationären Koordinatenmesssystems ermittelt werden.

Ein Verfahren zum Kalibrieren eines Koordinatenmesssystems unter Verwendung eines bereits kalibrierten Koordinatenmesssystems ist außerdem aus EP 1 236 972 A2 bekannt.

WO 2009/135447 A2 beschreibt ein interferometrisches System zur Kompensation von Variationen im Brechungsindex der umgebenden Atmosphäre. Dazu wird ein Laserstrahl mittels eines Strahlteilers und Reflektoren von entgegengesetzten Seiten in einen Messpfad eingeleitet, in dem sich ein Doppelreflektor befindet. Auf beiden Seiten des Doppelreflektors ist ein Interferometerdetektor angeordnet, um den jeweils vom Doppelreflektor reflektierten sowie den einfallenden Laserstrahl zu erfassen und interferometrisch zu überlagern. Anschließend erfolgt eine Summenbildung. Ändert sich der Brechungsindex der Atmosphäre nicht, bleibt die Summe der Messwerte aus den beiden Interferometerdetektoren auch beim Bewegen des Doppelreflektors konstant. Bei Änderungen im Brechungsindex kann die Wellenlänge des emittierten Laserstrahls angepasst werden.

Um eine solche Nulllage in der Messvorrichtung einzustellen, werden kalibrierte Normale oder Endmaße in verschiedenen Gestalten verwendet. Diese Normale oder Endmaße sind aber auch mit Unsicherheiten behaftet. Die Unsicherheit eines zylindrischen Rings wird von der Physikalisch Technischen Bundesanstalt (PTB) mit 50 Nanometern angegeben. Es können auch Endmaße verwendet werden, deren Unsicherheit mit 20 Nanometern angegeben ist. Somit ist die Messgenauigkeit stets auf die Genauigkeit des Referenzobjekts beschränkt, das zum Festlegen der Ausgangslage des Tastelements der Messvorrichtung verwendet wird. Dazu kommen weitere Messungenauigkeiten durch die Tasteinheit selbst.

Ausgehend davon kann es als Aufgabe der Erfindung angesehen werden, eine Messvorrichtung und ein Verfahren zu schaffen, das die Messunsicherheit reduziert. Diese Aufgabe wird durch eine Messvorrichtung mit den Merkmalen des Patentanspruches 1 sowie ein Verfahren mit den Merkmalen des Patentanspruches 12 gelöst.

Zu der Messvorrichtung gehört ein erstes Trägerteil, an dem eine erste Tasteinheit angeordnet ist, die ein erstes Tastelement aufweist. Das erste Tastelement hat zum Antasten eines Werkstücks in der Antastrichtung eine innere Tastseite und optional auch eine der inneren Tastseite entgegengesetzte äußeren Tastseite. Die äußere Tastseite des ersten Tastelements ist vom ersten Trägerteil abgewandt bzw. die innere Tastseite des ersten Tastelements ist dem ersten Trägerteil zugewandt. Abhängig von der Ausführung der ersten Tasteinheit kann ein Werkstück in Antastrichtung daher mit nur einer der Tastseiten oder wahlweise mit der äußeren Tastseite oder der entgegengesetzten inneren Tastseite des Tastelements angetastet werden.

An einem zweiten Trägerteil ist eine zweite Tasteinheit angeordnet, die ein zweites Tastelement aufweist. Die zweite Tasteinheit ist entsprechend der ersten Tasteinheit aufgebaut. Das zweite Tastelement hat analog zum ersten Tastelement in der Antastrichtung eine innere Tastseite und optional eine entgegengesetzte äußere Tastseite. Die äußere Tastseite des zweiten Tastelements ist vom zweiten Trägerteil abgewandt bzw. die innere Tastseite des zweiten Tastelements ist dem zweiten Trägerteil zugewandt.

Die erste Tasteinheit und/oder die zweite Tasteinheit ist außerdem dazu eingerichtet ein erstes bzw. zweites Tastsignal zu erzeugen, das anzeigt, ob das jeweilige Tastelement in Kontakt mit dem Werkstück oder einem anderen Objekt steht. Hierzu kann die betreffende Tasteinheit beispielsweise die Auslenkung des Tastelements aus einer Ruhestellung und/oder die auf das erste Tastelement einwirkende Kraft erfassen. Eine der Tasteinheiten kann auch passiv ausgeführt sein, also ohne die Möglichkeit zur Erzeugung eines Tastsignals, und kann somit nicht messend ohne Sensorik ausgeführt sein, beispielsweise einen nicht auslenkbaren Antastkörper aufweisen.

Die Messvorrichtung hat eine erste Positionieranordnung, die dazu eingerichtet ist, ein erstes Trägerteil relativ zu einer Maschinenbasis in einer Antastrichtung zu positionieren und eine zweite Positionieranordnung, die dazu eingerichtet ist, das zweite Trägerteil relativ zu einer Maschinenbasis in Antastrichtung zu positionieren. Die erste und/oder die zweite Positionieranordnung können außerdem dazu eingerichtet sein, das jeweilige Trägerteil zusätzlich zu der translatorischen Bewegung in Antastrichtung auch in einem oder mehreren anderen Freiheitsgraden zu positionieren. Dabei sind Positionierungen in bis zu sechs Freiheitsgraden möglich.

Das erste oder das zweite Trägerteil bzw. das erste oder das zweite Tastsystem können feststehend gegenüber der Maschinenbasis ausgeführt sein.

Die Messvorrichtung weist außerdem eine Steuereinheit auf, der die Tastsignale der Tasteinheiten übermittelt werden. Die Steuereinheit ist außerdem dazu eingerichtet, die Positionieranordnungen anzusteuern und die nachfolgend beschriebenen Schritte auszuführen:

Bevor die eigentliche Messung erfolgt, wird eine Bezugsebene festgelegt, die sozusagen die Ausgangs- oder Nulllage der Tastelemente definiert. Hierzu wird die erste Positioniereinheit und/oder die zweite Positioniereinheit angesteuert, um die innere Tastseite des ersten Tastelements mit der inneren Tastseite des zweiten Tastelements in Kontakt zu bringen. Sobald das erste Tastsignal und/oder das zweite Tastsignal anzeigen, dass die beiden Tastelemente in Kontakt stehen, wird die aktuelle Berührstelle der beiden Tastelemente in Bezug auf ein zur Maschinenbasis ortfestes Koordinatensystem als Punkt in der Bezugsebene definiert. Die Bezugsebene ist rechtwinklig zur Antastrichtung ausgerichtet und damit durch den Berührpunkt der beiden Tastelemente eindeutig definiert. Die Bezugsebene ist ortsfest gegenüber der Maschinenbasis. Wenn die inneren Tastseiten aneinander zur Anlage gebracht werden, müssen die Tastelemente zuvor aneinander vorbei bewegt werden. Das kann durch eine entsprechende Relativbewegung der Trägerteile und/oder ein abgewinkelten Tasteinsatz und/oder eine Schrägstellung der Tasteinsätze mit den Tastelementen relativ zueinander oder durch quer zur Antastrichtung versetzt zueinander angeordnete Tastelement erfolgen.

Bei der Bestimmung der Bezugsebene wird insbesondere eine Relativbewegung der jeweiligen Tasteinheit gegenüber dem Trägerteil, an dem die Tasteinheit angeordnet ist, vermieden. Vielmehr ist es insbesondere vorgesehen, dass die Trägerteile gemeinsam mit der jeweils daran angeordneten Tasteinheit relativ zueinander translatorisch und/oder rotatorisch bewegt werden. Ausgehend von dieser Bezugsebene kann bei der späteren Messung durch Ermittlung des Abstands des Tastelements von der Bezugsebene bzw. beide Abstände der Tastelemente von der Bezugsebene ein Längenmesswert an einem Werkstück ermittelt werden.

Das Festlegen der Bezugsebene erfolgt ohne kalibrierte Körper oder Endmaße. Durch das Antasten der beiden Tastelemente gegeneinander wird eine Bezugsebene definiert. Die genaue Geometrie der Tastelemente muss nicht bekannt sein.

Das Festlegen einer Null- bzw. Ausgangslage durch das Festlegen der Bezugsebene ist sehr einfach und ermöglicht hochgenaue Messungen in Antastrichtung.

Ausgehend von dieser Bezugsebene können die Abstände der Tastelemente von der Bezugsebene ermittelt werden. Wenn ein Werkstück z.B. an seinen in Antastrichtung entgegengesetzten Seiten durch die beiden Tastelemente angetastet wird, kann der Abstand zwischen diesen beiden Seiten, etwa ein Außendurchmesser eines zylindrischen Werkstücks, erfasst werden. Es ist alternativ oder zusätzlich auch möglich, den Abstand voneinander zugewandten Innenseiten eines Werkstücks durch die beiden Tastelemente zu bestimmen.

Jedes Tastelement weist entgegengesetzt zu der inneren Tastseite eine äußere Tastseite auf . Die äußeren Tastseiten des beiden Tastelemente können auch zur Festlegung einer anderen Bezugsebene in Kontakt gebracht werden.

Es ist vorteilhaft, wenn die Steuereinheit dazu eingerichtet ist, abzufragen, ob an dem Werkstück in Antastrichtung ein Innenabstand zwischen zwei aneinander zugewandten Werkstückflächen oder ein Außenabstand zwischen zwei aneinander abgewandten Werkstückflächen zu messen ist. Die Abfrage kann beispielsweise derart erfolgen, dass die Information aus einem Messprogramm der Messvorrichtung erhalten wird.

Abhängig davon, ob ein Innenabstand oder ein Außenabstand gemessen werden soll, werden zur Messung eines Innenabstandes beim Festlegen der Bezugsebene die beiden inneren Tastseiten der Tastelemente in Kontakt gebracht. Soll ein Außenabstand gemessen werden, werden die beiden äußeren Tastseiten der Tastelemente zur Festlegung der Bezugsebene in Kontakt gebracht.

Die Information, ob ein Innenabstand oder ein Außenabstand gemessen werden soll, kann der Steuereinheit auch von einer Bedienperson über eine entsprechende Vorgabe übermittelt werden. Die Information kann auch fest in der Steuereinheit vorgegeben sein, wenn mit der Messvorrichtung lediglich Innenabstände oder Außenabstände gemessen werden.

Es ist vorteilhaft, wenn wenigstens eine der Tasteinheiten gemeinsam mit dem jeweiligen Trägerteil rotatorisch um die Antastrichtung und/oder translatorisch rechtwinklig zu der Antastrichtung gelagert ist. Dadurch kann die Tasteinheit mit dem Tastelement und dem Trägerteil rotatorisch und/oder translatorisch durch die jeweilige Positionieranordnung bewegt werden. Durch die rotatorische und/oder translatorische Bewegung in einer zur Bezugsebene parallelen Ebene können die beiden Tasteinheiten in Antastrichtung aneinander vorbei bewegt und mit ihren inneren Tastseiten in Kontakt gebracht werden.

Es ist weiter vorteilhaft, wenn jedes Tastelement an einem freien Ende eines Tasteinsatzes der jeweiligen Tasteinheit angeordnet ist oder durch das freie Ende des Tasteinsatzes gebildet ist. Der Tasteinsatz erstreckt sich vorzugsweise stiftförmig bis zu seinem freien Ende bzw. bis zum Tastelement und ist mit seinem dem Tastelement entgegengesetzten Ende mit einem Tastkopf der jeweiligen Tasteinheit verbunden. Abhängig von der Messaufgabe können die Tasteinsätze bzw. die Tastelemente austauschbar sein. Das Tastelement kann beispielsweise eine Tastkugel oder eine Kugelkalotte sein. Das Tastelement kann auch eine oder mehrere Tastspitzen aufweisen. Das Tastelement ist in Antastrichtung zur Bildung der Tastinnenseite und/oder der Tastaußenseite vorzugsweise entsprechend auf einer oder beiden entgegengesetzten Seiten konvex ausgeführt, beispielsweise durch eine einzige Kugel oder Kugelkalotte oder zwei Kugeln oder zwei Kugelkalotten.

Bei einem Ausführungsbeispiel kann der jeweilige Tastkopf dazu eingerichtet sein, eine auf das Tastelement einwirkende Kraft zu erfassen und/oder eine Auslenkung des Tastelements aus einer Ruhestellung zu erfassen. Beispielsweise kann der Tasteinsatz schwenkbar um eine rechtwinklig zur Antastrichtung ausgerichtete Schwenkachse am Tastkopf gelagert sein.

Zur Messung bzw. Bestimmung des aktuellen Abstandes des jeweiligen Tastelements von der Bezugsebene kann jedem Trägerteil wenigstens eine Interferometeranordnung zugeordnet sein. Die Interferometeranordnung weist ein entweder am Trägerteil oder an der Maschinenbasis angeordnetes Laserinterferometer sowie wenigstens einen Reflektor auf, der an der Maschinenbasis angeordnet ist, wenn das Laserinterferometer an dem Trägerteil angeordnet ist, und der am Trägerteil angeordnet ist, wenn das Laserinterferometer an der Maschinenbasis angeordnet ist. Das Laserinterferometer kann dazu eingerichtet sein, wenigstens einen Lasermessstrahl in eine jeweilige Abstrahlrichtung, die parallel zur Antastrichtung ausgerichtet ist, auf einen jeweils zugeordneten Reflektor abzustrahlen und den jeweils am Reflektor reflektierten Lasermessstrahl zu empfangen. Durch Differenzbildung mit einem Laserreferenzstrahl in einem Referenzlichtweg kann ein Abstand des Laserinterferometers relativ zum Reflektor und mithin des Trägerteils bzw. des Tastelements relativ zur Bezugsebene ermittelt werden. Eine Veränderung des Abstands des Laserinterferometers vom betreffenden Reflektor kann hochgenau erfasst werden. Befindet sich das betreffende Tastelement in der Bezugsebene, kann dies in der Interferometeranordnung bzw. der Steuereinheit als Nulllage definiert werden. Von dieser Nulllage aus können Relativbewegungen des Laserinterferometers gegenüber dem wenigstens einen Reflektor ermittelt werden, was der Relativbewegung des Tastelements gegenüber der Bezugsebene in Antastrichtung entspricht. Dadurch ist die Position des jeweiligen Tastelements hochgenau verfügbar. Das Laserinterferometer übermittelt wenigstens ein Abstandssignal an die Steuereinheit, das den Abstand des Laserinterferometers in Antastrichtung gegenüber dem wenigstens einen Reflektor beschreibt.

Es ist möglich, dass das Laserinterferometer zwei Lasermessstrahlen in entgegengesetzten Abstrahlrichtungen parallel zur Antastrichtung auf jeweils einen Reflektor abstrahlt. Dadurch kann eine redundante Ermittlung des Abstands erfolgen und die Messgenauigkeit weiter erhöht werden. Außerdem ergibt sich dadurch die Möglichkeit, Umgebungseinflüsse durch Veränderungen der Temperatur, der Dichte oder der Zusammensetzung der Luft, usw. zu erkennen und bei der Bestimmung des Messwertes zu korrigieren.

Es ist vorteilhaft, wenn jedem Trägerteil jeweils zwei Interferometeranordnungen zugeordnet sind. Die Laserinterferometer der beiden Interferometeranordnungen eines Trägerteils haben in einer Querrichtung, rechtwinklig zu der Antastrichtung jeweils denselben Abstand von einer Mittelebene. Die Mittelebene wird durch die Antastrichtung und eine Höhenrichtung rechtwinklig zur Antastrichtung und rechtwinklig zur Querrichtung aufgespannt. Die Mittelebene ist rechtwinklig zur Bezugsebene ausgerichtet. Es ist bevorzugt, wenn das Antasten des Werkstücks mittels des Tastelements und/oder der beiden Tastelemente zur Festlegung der Bezugsebene in der jeweiligen Mittelebene erfolgt. Wenn der Abstand der Laserinterferometer zur Mittelebene ungleich groß ist, muss die Differenz bekannt sein und kann bei der Korrektur entsprechend berücksichtigt werden.

Die Bezugsebene ist vorzugsweise die Ebene, die in der Mitte zwischen den Ebenen angeordnet ist, in denen die Reflektoren angeordnet sind, so dass alle Reflektoren denselben Abstand zu der Bezugsebene aufweisen.

Es ist vorteilhaft, wenn die Messvorrichtung einen Messrahmen aufweist. Der Messrahmen ist an der Maschinenbasis angeordnet und trägt die vorhandenen Reflektoren. Der Messrahmen ist frei von Kräften, die durch das Werkstück, die Positionieranordnungen oder die Tasteinheiten verursacht werden. Äußere Kräfte durch die Messvorrichtung oder das Werkstück wirken nicht auf den Messrahmen ein. Beispielsweise kann der Messrahmen eine Grundplatte aufweisen, von der parallel zur Bezugsebene und parallel zur Mittelebene Säulen weg ragen, wobei an jeder Säule ein Reflektor angeordnet ist. Die Säulen und die Reflektoren einer Interferometeranordnung liegen sich in Antastrichtung paarweise gegenüber. Bei einem Beispiel können vier Reflektoren und mithin vier Säulen am Messrahmen vorhanden sein.

Anstelle der wenigstens einen Interferometeranordnung können alternativ oder zusätzlich auch andere bekannte Messanordnungen bzw. Maßverkörperungen verwendet werden, die durch mechanische und/oder optische und/oder magnetische und/oder elektromagnetische und/oder andere Mittel die Bestimmung der Position des Tastelements ermöglichen.

Vorteilhafte Ausgestaltungen der Erfindung ergeben sich aus den abhängigen Patentansprüchen, der Beschreibung und der Zeichnung. Nachfolgend werden bevorzugte Ausführungsbeispiele der Erfindung anhand der beigefügten Zeichnung im Einzelnen erläutert. Es zeigen:
Figur 1 eine schematische, blockschaltbildähnliche Darstellung eines Ausführungsbeispiels einer Messvorrichtung,
Figur 2 die Messvorrichtung aus Figur 1 in einer perspektivischen Teildarstellung,
Figur 3 eine schematische perspektivische Prinzipdarstellung des Antastens zweier Tastelemente aneinander zum Festlegen einer Bezugsebene,
Figur 4 eine schematische Prinzipdarstellung beim Messen eines Innenabstandes,
Figur 5 eine schematische perspektivische Prinzipdarstellung des Antastens zweier Tastelemente zum Festlegen einer Bezugsebene,
Figur 6 eine schematische Prinzipdarstellung beim Messen eines Außenabstandes,
Figur 7 eine schematische perspektivische Prinzipdarstellung des Antastens zweier Tastelemente zum Festlegen einer Bezugsebene und
Figur 8 eine schematische Prinzipdarstellung beim Messen eines Innenabstandes.

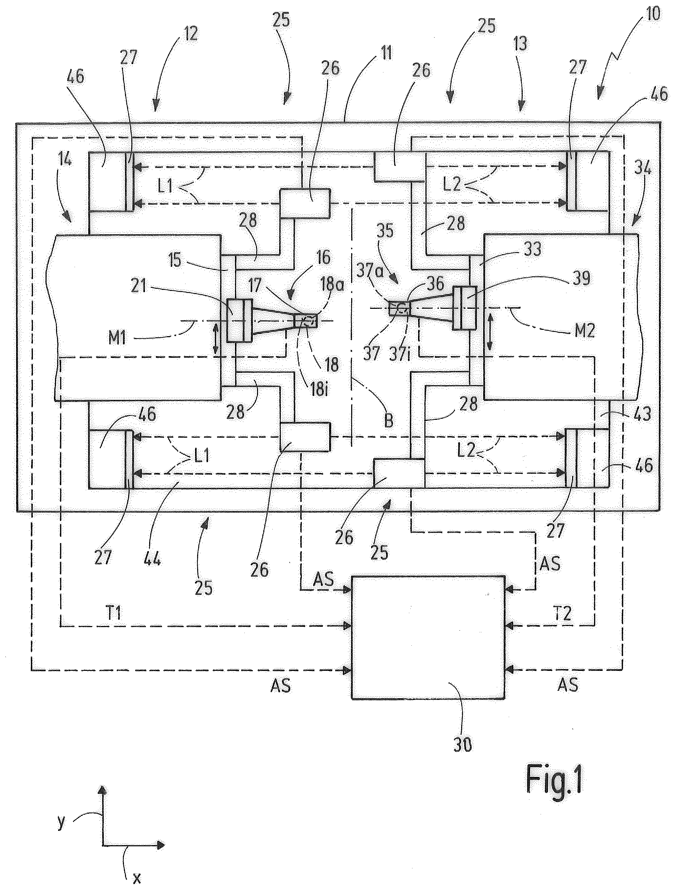

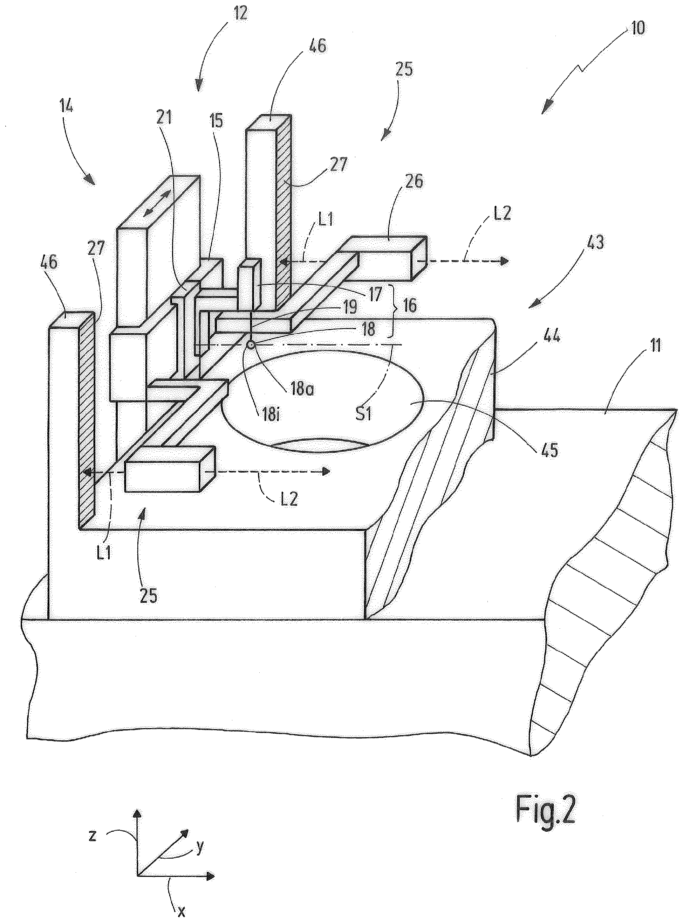

In den Figuren 1 und 2 ist ein Ausführungsbeispiel einer Messvorrichtung 10 dargestellt. Die Messvorrichtung 10 hat eine Maschinenbasis 11, die zum Aufstellen der Messvorrichtung 10 auf einem Untergrund dient. Die Maschinenbasis 11 kann ein Maschinengestell oder ein gegossener Körper sein.

Die Messvorrichtung 10 hat beim Ausführungsbeispiel zwei im Wesentlichen identisch aufgebaute Messeinheiten 12, 13, wobei in Figur 2 lediglich die erste Messeinheit 12 veranschaulicht ist.

Zu der ersten Messeinheit 12 gehört eine erste Positionieranordnung 14, die dazu eingerichtet ist, ein erstes Trägerteil 15 in einer Antastrichtung x relativ zur Maschinenbasis 11 zu positionieren. Die erste Positionieranordnung 14 kann weiterhin dazu eingerichtet sein, das erste Trägerteil 15 zusätzlich in weiteren Freiheitsgraden zu positionieren, wobei dies translatorische und/oder rotatorische Freiheitsgrade sein können. Hierfür kann die erste Positionieranordnung 14 entsprechende Antriebe und translatorische bzw. rotatorische Führungen aufweisen. Das erste Trägerteil 15 kann in bis zu 6 Freiheitsgraden bewegbar sein.

An dem ersten Trägerteil 15 der ersten Messeinheit 12 ist eine erste Tasteinheit 16 angeordnet. Zu der ersten Tasteinheit 16 gehört ein erster Tastkopf 17 sowie ein erstes Tastelement 18. Das erste Tastelement 18 ist an einem freien Ende eines ersten Tasteinsatzes 19 angeordnet oder von diesem freien Ende gebildet. Das entgegengesetzte Ende des ersten Tasteinsatzes 19 ist mit dem ersten Tastkopf 17 verbunden. Der erste Tastkopf 17 ist dazu eingerichtet, eine auf das erste Tastelement 18 einwirkende Kraft und/oder eine Auslenkung des ersten Tastelements 18 aus einer Ruhelage zu erfassen. Auf diese Weise kann beispielsweise ein Werkstück 20 zur Erfassung eines Längenmesswertes angetastet werden.

Die erste Tasteinheit 16 ist in Antastrichtung x relativ zum ersten Trägerteil 15 unbeweglich angeordnet. Die erste Positionieranordnung 14 kann dazu eingerichtet sein, die erste Tasteinheit 16 rechtwinklig zur Antastrichtung x translatorisch und/oder rotatorisch um die Antastrichtung x zu bewegen. Bei dem hier beschriebenen Ausführungsbeispiel gehört zu der ersten Positionieranordnung 14 ein erster Schlitten 21, der zwischen dem ersten Trägerteil 15 und der ersten Tasteinheit 16 angeordnet ist und in einer Querrichtung y rechtwinklig zu der Antastrichtung x bewegbar am Trägerteil 15 angeordnet ist. Dadurch kann die erste Tasteinheit 16 zu Justagezwecken (z.B. vor einer Messung) mittels des ersten Schlittens 21 in Querrichtung y bewegt werden. Während der Messung ist eine Verschiebung des ersten Schlittens 21 nicht vorgesehen. Zusätzlich ist beim Ausführungsbeispiel vorgesehen, dass die erste Tasteinheit 16 um eine erste Schwenkachse S1 schwenkbar am ersten Schlitten 21 oder bei einer abgewandelten Ausführung am Trägerteil 15 angeordnet ist. Die erste Schwenkachse S1 erstreckt sich parallel zur Antastrichtung x. Die erste Schwenkachse S1 verläuft vorzugsweise mittig durch das erste Tastelement 18.

Zu der ersten Messeinheit 12 gehört außerdem wenigstens eine Interferometeranordnung 25. Bei dem hier gezeigten Ausführungsbeispiel weist die erste Messeinheit 12 zwei Interferometeranordnungen 25 mit jeweils einem Laserinterferometer 26 und jeweils wenigstens einem Reflektor 27 und beispielsgemäß jeweils zwei Reflektoren 27 auf. Das Laserinterferometer 26 ist jeweils als Doppelinterferometer ausgeführt und weist für jeden Lasermessstrahl eine Interferometereinheit auf. Die beiden Reflektoren 27 einer Interferometeranordnung 25 liegen sich in Antastrichtung x paarweise gegenüber. Jedes Laserinterferometer 26 sendet wenigstens einen Lasermessstrahl L1, L2 und bei dem hier beschriebenen Ausführungsbeispiel zwei Lasermessstrahlen L1, L2 aus, die vom Laserinterferometer 26 in entgegengesetzte Richtungen parallel zur Antastrichtung x auf jeweils einen zugeordneten Reflektor 27 abgestrahlt, dort reflektiert und im betreffenden Laserinterferometer 26 wieder empfangen werden. Wie bei einem Interferometer üblich, wird das am betreffenden Reflektor 27 reflektierte und empfangene Licht mit einem Referenzlaserstrahl überlagert, wodurch konstruktive und/oder destruktive Interferenz entsteht. Das Interferenzbild wird durch einen Empfänger, insbesondere eine Kamera, erfasst. Änderungen im Abstand des Laserinterferometers 26 von einem betreffenden Reflektor 27 können daher sehr genau erfasst werden, weil sich dadurch das Interferenzbild ändert. Somit ist es möglich, die Position des Laserinterferometers 26 in Antastrichtung x sehr genau zu bestimmen. Durch das Ermitteln der Position jedes Laserinterferometers 26 relativ zu zwei Reflektoren 27, ist eine Redundanz erreicht. Dadurch können Messungenauigkeiten weiter reduziert und äußere Einflüsse, die sich beispielsweise durch Veränderungen der Temperatur, der Luftzusammensetzung, der Dichte der Luft, usw. ergeben können, berücksichtigt werden.

Jedes Laserinterferometer 26 ist beispielsgemäß über eine Halterung 28 mit dem ersten Trägerteil 15 verbunden, insbesondere unbeweglich verbunden. Zumindest ist eine Relativbewegung des Laserinterferometers 26 in Antastrichtung x relativ zum Trägerteil 15 nicht möglich. Somit ist auch die Relativposition des Laserinterferometers 26 gegenüber dem ersten Tastelement 18 in Antastrichtung x unveränderbar.

Wie es in Figur 1 gezeigt ist, weist die erste Messeinheit 12 zwei Interferometeranordnungen 25 auf. Die beiden Laserinterferometer 26 der beiden Interferometeranordnungen 25 haben in Querrichtung y denselben Abstand zu einer ersten Mittelebene M1 der ersten Messeinheit 12. Die erste Mittelebene M1 ist rechtwinklig zur Querrichtung y orientiert und daher durch die Antastrichtung x und eine Höhenrichtung z aufgespannt. Die Höhenrichtung z ist rechtwinklig zur Antastrichtung x und zur Querrichtung y orientiert. Die erste Schwenkachse S1 erstreckt sich in der ersten Mittelebene M1. Die erste Mittelebene M1 verläuft durch das erste Tastelement 18. Das Antasten eines Werkstücks 20 beim Erfassen eines Längenmesswertes erfolgt in der ersten Mittelebene M1.

Die erste Tasteinheit 16 ist dazu eingerichtet, ein erstes Tastsignal T1 zu erzeugen, das angibt, ob das Tastelement 18 in Kontakt mit einem Objekt steht, beispielsweise einem Werkstück 20. Durch die auf das Tastelement 18 einwirkende Kraft und/oder die Auslenkung des Tastelements 18 kann die Berührung bzw. der Kontakt mit dem Objekt erkannt werden. Das erste Tastsignal T1 wird einer Steuereinheit 30 übermittelt.

Die zweite Messeinheit 13 ist analog zur ersten Messeinheit 12 aufgebaut. Es wird daher im Wesentlichen auf die vorstehende Beschreibung verwiesen. Die zweite Messeinheit 13 weist ein zweites Trägerteil 33 auf, das durch eine zweite Positionieranordnung 34 in Antastrichtung x und gegebenenfalls in weiteren translatorischen und/oder rotatorischen Freiheitsgraden bewegbar ist. An dem zweiten Trägerteil x ist eine zweite Tasteinheit 35 mit einem zweiten Tastkopf 36 und einem zweiten Tastelement 37 angeordnet. Analog zur ersten Messeinheit 12 ist zwischen dem zweiten Trägerteil 33 und dem Tastkopf 36 ein zweiter Schlitten 39 vorhanden, der nur zur Justagezwecken (wenn nicht gemessen wird) in Querrichtung y verschiebbar ist. Das zweite Tastelement 37 ist am freien Ende eines zweiten Tasteinsatzes 38 angeordnet oder durch dieses freie Ende gebildet. Zusätzlich ist beim Ausführungsbeispiel vorgesehen, dass die zweite Tasteinheit 35 um eine zweite Schwenkachse S2 schwenkbar am zweiten Schlitten 39 oder bei einer abgewandelten Ausführung am zweiten Trägerteil 39 angeordnet ist. Die zweite Schwenkachse S2 erstreckt sich parallel zur Antastrichtung x. Die zweite Schwenkachse S2 verläuft vorzugsweise mittig durch das zweite Tastelement 37.

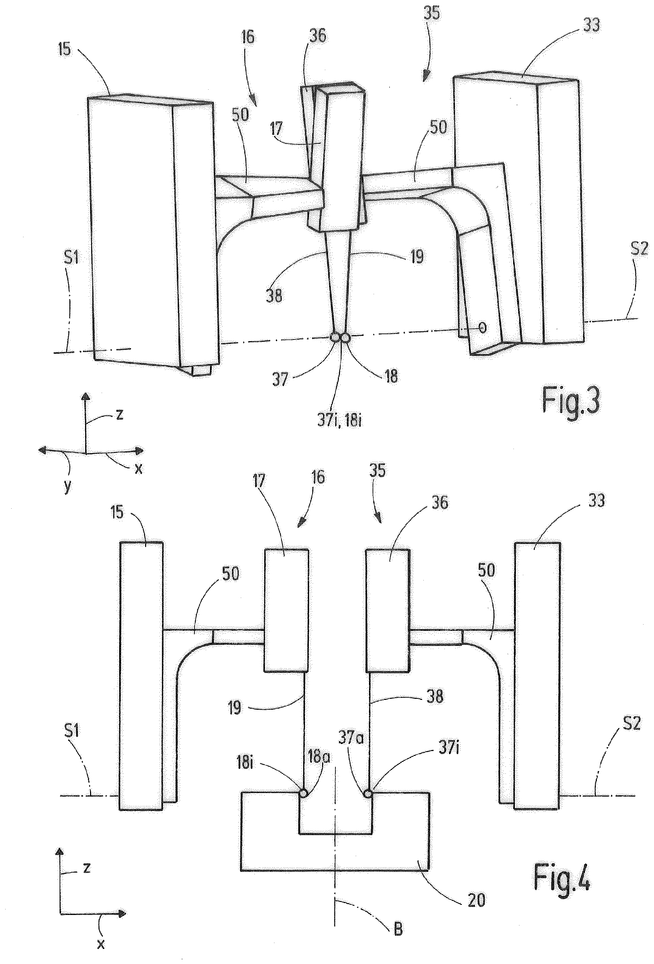

Die beiden Schlitten 21, 39 können abweichend zu den Figuren 1 und 2 auch entfallen. In den Figuren 3 bis 8 ist lediglich schematisch das Trägerteil 15 bzw. 33 ohne den Schlitten 21, 39 veranschaulicht.

Die zweite Messeinheit 13 hat wie die erste Messeinheit 12 auch, wenigstens eine und beispielsgemäß zwei Interferometeranordnungen 25 mit jeweils einem Laserinterferometer 26. Die Laserinterferometer 26 der beiden Interferometeranordnungen 25 der zweiten Messeinheit 13 sind in Querrichtung y mit gleichem Abstand zu einer zweiten Mittelebene M2 angeordnet, die rechtwinklig zur Querrichtung y ausgerichtet ist.

Die zweite Tasteinheit 35 ist dazu eingerichtet ein zweites Tastsignal T2 zu erzeugen, wenn ein Kontakt zwischen dem zweiten Tastelement 37 und einem Objekt, beispielsweise einem Werkstück 20, festgestellt wird. Auch das zweite Tastsignal T2 wird der Steuereinheit 30 übermittelt.

Außerdem enthält die Steuereinheit 30 von jeder Interferometeranordnung 25 wenigstens ein Abstandssignal AS. Bei dem hier beschriebenen Ausführungsbeispiel sendet jedes Laserinterferometer 26 zwei Lasermessstrahlen L1, L2 in entgegengesetzte Abstrahlrichtungen zu jeweils einem Reflektor 27 aus und kann dadurch zwei unabhängige Abstandswerte zu den beiden Reflektoren 27 erfassen. Entsprechend kann das betreffende Abstandssignal AS jeder Interferometeranordnung 25 beispielsgemäß zwei unabhängige Abstandswerte enthalten und an die Steuereinheit übermitteln. Dadurch ist eine Redundanz vorhanden, mittels der auch Umgebungseinflüsse erkannt, berücksichtigt und bei der Berechnung von korrigierten Abstandswerten des betreffenden Tastelements 18, 37 gegenüber einer Nulllage bzw. Bezugsebene verwendet werden können.

In den Figuren 1 und 2 ist schematisch dargestellt, dass die Reflektoren 27 beispielsgemäß nicht unmittelbar an der Maschinenbasis 11, sondern an einem Messrahmen 43 angeordnet sind. Der Messrahmen 43 ist frei von Kräften durch die Positionieranordnungen 14, 34 und das Werkstück 20. Er muss keine Kräfte der Messeinrichtung 10 oder des Werkstücks abstützen. Der Messrahmen 43 ist auf der Maschinenbasis 11 angeordnet. Er hat beim Ausführungsbeispiel eine Grundplatte 44 mit einer Aussparung 45. In der Aussparung 45 kann das Werkstück bzw. eine Werkstückaufnahme oder Werkstückspanneinrichtung der Messeinrichtung 10 durch die Grundplatte 44 teilweise oder vollständig hindurchragen, ohne sich an der Grundplatte 44 bzw. dem Messrahmen 43 abzustützen.

In Höhenrichtung z ragen Säulen 46 des Messrahmens 43 weg. Sie haben beim Ausführungsbeispiel eine quaderförmige Gestalt. Die Säulen 46 sind paarweise in Antastrichtung x mit Abstand zueinander angeordnet. An den zugewandten Seiten zweiter sich in Antastrichtung x gegenüberliegenden Säulen 46 ist jeweils ein Reflektor 27 angeordnet. Die Laserinterferometer 26 der Interferometeranordnungen 25 befinden sich jeweils zwischen zwei sich in Antastrichtung x gegenüberliegenden Reflektoren 27 (Figur 1). Der Messrahmen 43 kann aus einem Material hergestellt sein, das einen kleinen Temperaturkoeffizienten aufweist. Es kann sich von dem Material der Maschinenbasis 11 unterscheiden.

Um einen Längenmesswert an einem Werkstück 20 ermitteln zu können, muss zunächst eine Ausgangslage oder Nulllage als Referenz gegenüber der Maschinenbasis 11 definiert werden. Bei dem hier beschriebenen Ausführungsbeispiel wird hierfür eine Bezugsebene B (Figur 1) definiert, die rechtwinklig zur Antastrichtung x ausgerichtet ist und gegenüber dem Messrahmen 43 bzw. der Maschinenbasis 11 unbeweglich ist. Die Vorgehensweise zum Festlegen der Bezugsebene B wird anhand der Figuren 3-8 erläutert.

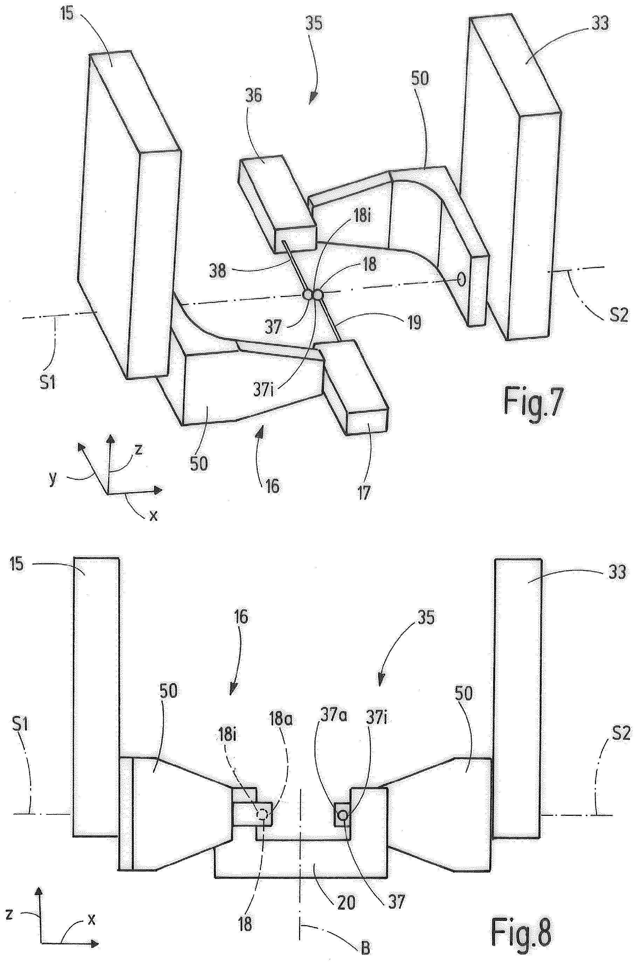

Das erste Tastelement 18 hat in Antastrichtung x betrachtet eine vom ersten Trägerteil 15 abgewandte äußere Tastseite 18a und eine dem ersten Trägerteil 15 zugewandte innere Tastseite 18i. Entsprechend hat das zweite Tastelement 37 eine vom zweiten Trägerteil 33 abgewandte äußere Tastseite 37a und eine dem zweiten Trägerteil 33 zugewandte innere Tastseite 37i. Die Tastseiten der beiden Trägerteile sind insbesondere in den Figuren 3-8 zu erkennen. Aufgrund der Schwenkbarkeit der beiden Tasteinheiten 16, 35 um die jeweilige Schwenkachse S1, S2 und/oder der Verschiebbarkeit der Trägerteile 15, 33 in Querrichtung y können die beiden Tasteinheiten 16, 25 durch Bewegen eines oder beider Trägerteile 15, 33 in Antastrichtung x aneinander vorbeibewegt werden. Dadurch ist es möglich, dass die beiden Tastelemente 18, 37 mit ihren jeweiligen inneren Tastseiten 18i, 37i in Kontakt gebracht werden. Eine solche Situation ist beispielhaft in Figur 3 sowie Figur 7 veranschaulicht.

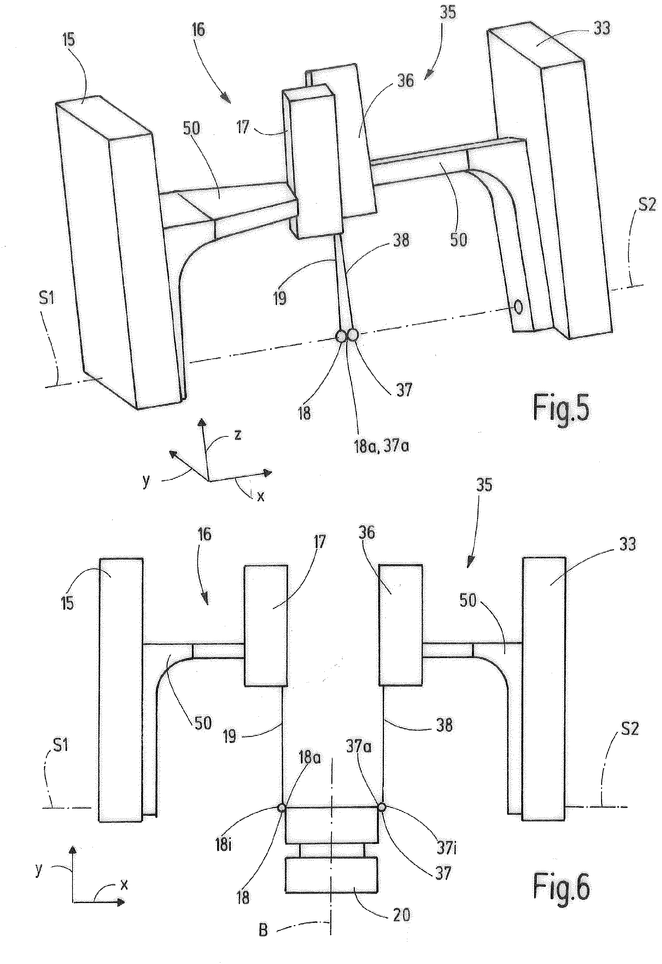

Ferner ist es möglich, die beiden Tasteinheiten 16, 35 so zu positionieren, dass sich die jeweiligen äußeren Tastseiten 18a, 37a der beiden Tastelemente 18 bzw. 37 berühren (Figur 5).

Durch das Inkontaktbringen der beiden Tastelemente 18, 37 entweder mit ihren jeweiligen äußeren Tastseiten 18a, 37a oder mit ihren jeweiligen inneren Tastseiten 18i, 37i, kann die Bezugsebene B an der Stelle des Berührpunktes festgelegt bzw. definiert werden. Ein einziger Punkt im Raum ist hierfür ausreichend, da die Orientierung der Bezugsebene B rechtwinklig zur Antastrichtung x gegeben ist. Die Steuereinheit 30 speichert die Position der Tastelemente 18, 37 bzw. der sich aneinander berührenden Tastseiten 18i und 37i oder 18a und 37a als Nulllage in Antastrichtung x ab. Anschließend kann über die wenigstens eine Interferometeranordnung 25 jeder Messeinheit 12 bzw. 13 eine Bewegung des Tastelements 18 bzw. 37 in Antastrichtung x ausgehend von der Bezugsebene B (also ausgehend von der Nulllage) gemessen werden. Wird anschließend ein Werkstück 20 durch die beiden Tasteinheiten 16, 35 angetastet, kann daraus ein Längenmesswert für das Werkstück 30 ermittelt werden, da die Position der beiden Tastelemente 18, 37 beim Antasten des Werkstücks 20 relativ zur Bezugsebene B bekannt ist.

Beim Antasten der beiden Tastelemente 18, 37 bzw. beim Berühren der Tastseiten 18i und 37i oder 18a und 37a zur Bestimmung der Bezugsebene B werden die Tasteinheiten 16, 35 nicht relativ zu ihrem jeweiligen Trägerteil 15, 33 bewegt, um die Genauigkeit nicht zu beeinträchtigen. Eine Bewegung der Tasteinheiten 16, 35 relativ zu ihrem jeweiligen Trägerteil 15, 33 kann vor der Messung zur Ausrichtung der Tastelemente 18, 37 beim Einrichten der Messvorrichtung oder zu sonstigen Justagezwecken durchgeführt werden.

Insbesondere ist die Steuereinheit 30 bzw. die Messvorrichtung 10 dazu eingerichtet, die Bezugsebene B durch Inkontaktbringen der beiden inneren Tastseiten 18i, 37i der Tastelemente 18, 37 zu definieren, wenn am Werkstück 20 ein Innenabstand zwischen zwei einander zugewandten Werkstückflächen gemessen werden soll, wie es beispielhaft in den Figuren 4 und 8 veranschaulicht ist. Wenn am Werkstück 20 ein Außenabstand zwischen zwei einander abgewandten Werkstückflächen ermittelt werden soll, wird die Bezugsebene B vorzugsweise durch Inkontaktbringen der beiden äußeren Tastseiten 18a, 37a der Tastelemente 18, 37 definiert (Figuren 5 und 6). Dadurch erfolgt das Antasten des Werkstücks 20 in derselben Orientierung in Antastrichtung x wie das Festlegen der Bezugsebene B. Die Messungenauigkeit, die durch die Tasteinheiten 16, 35 verursacht werden kann, wenn sich die Orientierung der Antastung in Antastrichtung x ändert, wird dadurch reduziert.

Das Berühren der beiden äußeren Tastseiten 18a, 37a bzw. der beiden inneren Tastseiten 18i, 37i kann in der Steuereinheit 30 durch das erste Tastsignal T1 und/oder das zweite Tastsignal T2 erkannt werden. Die beiden Tasteinheiten 16, 35 werden dabei in einer Schwenklage um die jeweilige Schwenkachse S1, S2 gebracht, die möglichst mit der Orientierung beim Messen des Werkstücks 20 übereinstimmt. Beispielsweise können die Tasteinsätze 19, 38 in etwa in Höhenrichtung z oder mit einem kleinen, spitzen Winkel gegenüber der Höhenrichtung z orientiert sein (Figur 3), wenn beim Messen des Werkstücks 20 die Tasteinsätze 38, 39 ebenfalls im Wesentlichen in Höhenrichtung z orientiert sind. Umgekehrt können die Tasteinsätze 19, 38 beim Festlegen der Bezugsebene B (Figur 7) auch in etwa in Querrichtung y orientiert sein, wenn diese Position auch beim anschließenden Messen des Werkstücks 20 verwendet wird (Figur 8).

Durch die Schwenkbarkeit zumindest einer der beiden Tasteinheiten 16, 35 und/oder die Beweglichkeit zumindest eines der beiden Trägerteile 15, 33 in Querrichtung y, können die Tastelemente 18, 37 in Antastrichtung x aneinander vorbei und mit ihren jeweiligen inneren Tastseiten 18i, 37i zur Anlage gebracht werden (Figuren 3 und 7). Hierfür sind die Tastköpfe 17, 36 mit dem jeweils zugeordneten Schlitten 21, 39 über jeweils ein Halteteil 50 schwenkbar um die jeweilige Schwenkachse S1, S2 verbunden. Um mit der jeweiligen inneren Tastseite 18i, 37i antasten zu können, muss jedenfalls ein ausreichend großer Abstand zwischen der betreffenden inneren Tastseite 18i, 37i und dem jeweils zugeordneten Schlitten 21, 39 bzw. Trägerteil 15, 33 vorhanden sein. Dies kann beispielsgemäß durch das Halteteil 50 erreicht werden, der einen sich in Antastrichtung x erstreckenden Abschnitt aufweist.

Die Erfindung betrifft eine Messvorrichtung 10 und ein Verfahren zu deren Betrieb. Die Messvorrichtung 10 weist zwei Messeinheiten 12, 13 mit jeweils einer Tasteinheit 16, 35 auf. Jede Tasteinheit hat ein Tastelement 18, 37. Jedes Tastelement 18, 37 hat in einer Antastrichtung x eine äußere Tastseite 18a bzw. 37a sowie eine zu der äußeren Tastseite entgegengesetzte innere Tastseite 18i bzw. 37i. Zum Festlegen einer Nulllage bzw. einer Bezugsebene B rechtwinklig zur Antastrichtung x können die beiden Tastelemente mit ihren jeweiligen äußeren Tastseiten 18a, 37a oder ihren jeweiligen inneren Tastseiten 18i, 37i in Kontakt gebracht werden. Sobald einer der beiden Tasteinheiten 16 bzw. 35 den Kontakt zwischen den zugeordneten Tastseiten 18a, 37a bzw. 18i, 37i erfasst, wird durch den Berührpunkt zwischen den beiden Tastelementen eine Bezugsebene B als Nulllage in Antastrichtung x definiert. Dadurch kann die Nulllage ohne kalibrierte Normale oder Endmaße einfach und genau festgelegt werden.

### BEZUGSZEICHENLISTE:

- 10: Messvorrichtung
- 11: Maschinenbasis
- 12: erste Messeinheit
- 13: zweite Messeinheit
- 14: erste Positionieranordnung
- 15: erstes Trägerteil
- 16: erste Tasteinheit
- 17: erster Tastkopf
- 18: erstes Tastelement
- 18a: äußere Tastseite des ersten Tastelements
- 18i: innere Tastseite des ersten Tastelements
- 19: erster Tasteinsatz
- 20: Werkstück
- 21: erster Schlitten

- 25: Interferometeranordnung
- 26: Laserinterferometer
- 27: Reflektor
- 28: Halterung

- 30: Steuereinheit

- 33: zweites Trägerteil
- 34: zweite Positionieranordnung
- 35: zweite Tasteinheit
- 36: zweiter Tastkopf
- 37: zweites Tastelement
- 37a: äußere Tastseite des zweiten Tastelements
- 37i: innere Tastseite des zweiten Tastelements
- 38: zweiter Tasteinsatz
- 39: zweiter Schlitten
- 43: Messrahmen
- 44: Grundplatte
- 45: Aussparung
- 46: Säule

- 50: Halteteil

- AS: Abstandssignal
- M1: erste Mittelebene
- M2: zweite Mittelebene
- S1: erste Schwenkachse
- S2: zweite Schwenkachse
- T1: erstes Tastsignal
- T2: zweites Tastsignal
- x: Antastrichtung
- y: Querrichtung
- z: Höhenrichtung

## Patentansprüche

1. Messvorrichtung (10),
mit einer ersten Tasteinheit (16), die an einem ersten Trägerteil (15) angeordnet ist, und die ein erstes Tastelement (18) aufweist, das in einer Antastrichtung (x) eine dem ersten Trägerteil (15) zugewandte innere Tastseite (18i) und eine der inneren Tastseite (18i) in Antastrichtung (x) entgegengesetzte äußere Tastseite (18a) aufweist,
mit einer zweiten Tasteinheit (35), die an einem zweiten Trägerteil (33) angeordnet ist, und die ein zweites Tastelement (37) aufweist, das in Antastrichtung (x) eine dem zweiten Trägerteil (33) zugewandte inneren Tastseite (37i) und eine der inneren Tastseite (37i) in Antastrichtung (x) entgegengesetzte äußere Tastseite (37a) aufweist,
mit einer ersten Positionieranordnung (14), die dazu eingerichtet ist, das erste Trägerteil (15) relativ zu einer Maschinenbasis (11) in einer Antastrichtung (x) zu positionieren und mit einer zweiten Positionieranordnung (34), die dazu eingerichtet ist, das zweite Trägerteil (33) relativ zu der Maschinenbasis (11) in Antastrichtung (x) zu positionieren,
wobei die erste Tasteinheit (16) dazu eingerichtet ist, ein erstes Tastsignal (T1) zu erzeugen, das anzeigt, ob das erste Tastelement (18) in Kontakt mit einem Objekt steht und wobei die zweite Tasteinheit (35) dazu eingerichtet ist, ein zweites Tastsignal (T2) zu erzeugen, das anzeigt, ob das zweite Tastelement (37) in Kontakt mit einem Objekt steht,
mit einer Steuereinheit (30), der das erste und/oder zweite Tastsignal (T1, T2) übermittelt wird, wobei die Steuereinheit (30) dazu eingerichtet ist, die erste und/oder zweite Positionieranordnung (14, 34) anzusteuern und folgende Schritte auszuführen:
- Ansteuern der ersten und/oder zweiten Positionieranordnung (14, 34), um die innere Tastseite (18i) des ersten Tastelements (18) mit der inneren Tastseite (37i) des zweiten Tastelements (37) in Kontakt zu bringen wenn ein Innenabstand am Werkstück (20) gemessen werden soll, oder um die die äußere Tastseite (18a) des ersten Tastelements (18) mit der äußeren Tastseite (37a) des zweiten Tastelemente (37) in Kontakt zu bringen, wenn ein Außenabstand am Werkstück (20) gemessen werden soll,
- Festlegen einer rechtwinkelig zu der Antastrichtung (x) ausgerichteten Bezugsebene (B) durch Verwenden eines einzigen Berührpunktes im Raum an der Kontaktstelle der Tastelemente (18, 37), wenn das erste Tastsignal (T1) und/oder das zweite Tastsignal (T2) anzeigt, das die beiden Tastelemente (18, 37) in Kontakt stehen,
- Ermitteln eines Längenmesswerts am Werkstück (20) nach dem Festlegen der Bezugsebene (B) anhand der Abstände der Tastelemente (18, 37) von der Bezugsebene (B) beim Antasten des Werkstücks (20).

2. Messvorrichtung nach Anspruch 1,
**dadurch gekennzeichnet, dass** die Steuereinheit (30) dazu eingerichtet ist, abzufragen, ob an dem Werkstück (20) in Antastrichtung (x) ein Innenabstand zwischen zwei einander zugewandten Werkstückflächen oder ein Außenabstand zwischen zwei einender abgewandten Werkstückflächen in Antastrichtung (x) zu messen ist.

3. Messvorrichtung nach Anspruch 2,
**dadurch gekennzeichnet, dass** die Steuereinheit (30) dazu eingerichtet ist, die Information, ob an dem Werkstück (20) in Antastrichtung (x) ein Innenabstand oder ein Außenabstand zu messen ist, von einem zur Messung aktivierten Messprogramm abfragt.

4. Messvorrichtung nach einem der vorhergehenden Ansprüche,
**dadurch gekennzeichnet, dass** wenigstens eine der Tasteinheiten (16, 35) gemeinsam mit dem jeweiligen Trägerteil (15, 33) rotatorisch um die Antastrichtung (x) und/oder rechtwinkelig zu der Antastrichtung (x) translatorisch bewegbar gelagert ist.

5. Messvorrichtung nach einem der vorhergehenden Ansprüche,
**dadurch gekennzeichnet, dass** jedes Tastelement (18, 37) an einem freien Ende eines Tasteinsatzes (19, 38) der jeweiligen Tasteinheit (16, 35) angeordnet ist oder durch das freie Ende des Tasteinsatzes (19, 38) gebildet ist.

6. Messvorrichtung nach Anspruch 5,
**dadurch gekennzeichnet, dass** sich der Tasteinsatz (19, 38) stiftförmig bis zu dem Tastelement (18, 37) erstreckt und mit seinem dem Tastelement (18, 37) entgegengesetzten Ende mit einem Tastkopf (17, 36) der Tasteinheit (16, 35) verbunden ist.

7. Messvorrichtung nach Anspruch 5 oder 6,
**dadurch gekennzeichnet, dass** der Tastkopf (17, 36) dazu eingerichtet ist, eine auf das Testelement (18, 37) einwirkende Kraft zu erfassen und/oder eine Auslenkung des Testelements (18, 37) aus einer Ruhestellung zu erfassen.

8. Messvorrichtung nach einem der vorhergehenden Ansprüche,
**dadurch gekennzeichnet, dass** jedem Trägerteil (15, 33) jeweils wenigstens eine Interferometeranordnung (25) zugeordnet ist, aufweisend ein am Trägerteil (15, 33) oder an der Maschinenbasis (11) angeordnetes Laserinterferometer (26), das dazu eingerichtet ist, wenigstens einen Lasermessstrahl (L1, L2) in Antastrichtung (x) auf einen jeweils zugeordneten, Reflektor (27) abzustrahlen und den am Reflektor (27) reflektierten Lasermessstrahl (L1, L2) zu empfangen, wobei der Reflektor (27) an der Maschinenbasis (11) angeordnet ist, wenn das Laserinterferometer (26) an dem Trägerteil (15, 33) angeordnet ist, und wobei der Reflektor (27) an dem Trägerteil (15, 33) angeordnet ist, wenn das Laserinterferometer (26) an der Maschinenbasis (11) angeordnet ist.

9. Messvorrichtung nach Anspruch 8,
**dadurch gekennzeichnet, dass** das wenigstens eine Laserinterferometer (26) wenigstens ein Abstandssignal (AS) an die Steuereinheit (30) übermittelt, das den Abstand des Laserinterferometers (26) in Antastrichtung (x) gegenüber dem wenigstens Reflektor (27) beschreibt.

10. Messvorrichtung nach Anspruch 9,
**dadurch gekennzeichnet, dass** die vorhandenen Reflektoren (27) an einem an der Maschinenbasis (11) angeordneten Messrahmen (43) angeordnet sind.

11. Messvorrichtung nach einem der vorhergehenden Ansprüche,
**dadurch gekennzeichnet, dass** jedem Trägerteil (15, 33) jeweils zwei Interferometeranordnungen (25) zugeordnet sind, wobei die Laserinterferometer (26) der beiden Interferometeranordnungen (25) in einer Querrichtung (y) rechtwinkelig zu der Antastrichtung (x) jeweils denselben Abstand von einer Mittelebene (M1, M2) aufweisen, die rechtwinkelig zu der Querrichtung (y) ausgerichtet ist.

12. Verfahren zum Betreiben einer Messvorrichtung (10) mit einer ersten Tasteinheit (16), die an einem ersten Trägerteil (15) angeordnet ist, und die ein erstes Tastelement (18) aufweist, das in Antastrichtung (x) eine dem ersten Trägerteil (15) zugewandte innere Tastseite (18i) und eine der inneren Tastseite (18i) in Antastrichtung (x) entgegengesetzte äußere Tastseite (18a) aufweist, mit einer zweiten Tasteinheit (35), die am einem zweiten Trägerteil (33) angeordnet ist, und die ein zweites Tastelement (37) aufweist, das in Antastrichtung (x) eine dem zweiten Trägerteil (33) zugewandte inneren Tastseite (37i) und eine der inneren Tastseite (37i) in Antastrichtung (x) entgegengesetzte äußere Tastseite (37a) aufweist, einer ersten Positionieranordnung (14), zur Positionierung des ersten Trägerteil (15) relativ zu einer Maschinenbasis (11) in Antastrichtung (x) und einer zweiten Positionieranordnung (34) zur Positionierung des zweiten Trägerteils (33) relativ zur Maschinenbasis (11) in Antastrichtung (x), mit folgenden Schritten:
- Ansteuern der ersten Positioniereinheit (14) und der zweiten Positioniereinheit (34), um die innere Tastseite (18i) des ersten Tastelements (18) mit der inneren Tastseite (37i) des zweiten Tastelements (37) in Kontakt zu bringen, wenn ein Innenabstand am Werkstück (20) gemessen werden soll, oder um die die äußere Tastseite (18a) des ersten Tastelements (18) mit der äußeren Tastseite (37a) des zweiten Tastelemente (37) in Kontakt zu bringen, wenn ein Außenabstand am Werkstück (20) gemessen werden soll,
- Festlegen einer rechtwinkelig zu der Antastrichtung (x) ausgerichteten Bezugsebene (B) durch Verwenden eines einzigen Berührpunktes im Raum an der Kontaktstelle der beiden Tastelemente (18, 37), wenn ein Kontakt zwischen den Tastelementen (18, 37) erkannt wurde,
- Ermitteln eines Längenmesswerts am Werkstück (20) nach dem Festlegen der Bezugsebene (B) anhand der Abstände der Tastelemente (18, 37) von der Bezugsebene (B) beim Antasten des Werkstücks (20).

13. Verfahren nach Anspruch 12,
**dadurch gekennzeichnet, dass** das Antasten des Werkstücks (20) mittels der Tastelemente (18, 37) Z zur Messung des Längenmesswerts am Werkstück (20) in derselben Orientierung in Antastrichtung (x) erfolgt wie das Festlegen der Bezugsebene (B).

## Claims

1. Measuring device (10),
having a first probe unit (16), which is arranged on a first carrier part (15) and which comprises a first probe element that has in a probing direction (x) an inner probe side (18i) facing the first carrier part (15) and an outer probe side (18a) opposite the inner probe side (18i) in probing direction (x),
having a second probe unit (35), which is arranged on a second carrier part (33) and which has a second probe element (37) that has an inner probe side (37i) facing the second carrier part (33) in probing direction (x) and an outer probe side (37a) opposite to the inner probe side (37i) in probing direction (x),
having a first positioning arrangement (14), which is configured to position the first carrier part (15) relative to a machine base (11) in a probing direction (x) and having a second positioning arrangement (34) that is configured to position the second carrier part (33) relative to the machine base (11) in probing direction (x),
wherein the first probe unit (16) is configured to generate a first probe signal (T1), which indicates whether the first probe element (18) is in contact with an object and wherein the second probe unit (35) is configured to generate a second probe signal (T2) that indicates whether the second probe element (37) is in contact with an object,
having a control unit (30) to which the first and/or second probe signal (T1, T2) is transmitted, wherein the control unit (30) is configured to control the first and/or second positioning arrangement (14, 34) and to carry out the following steps:
- Controlling the first and/or second positioning arrangement (14, 34) in order to bring the inner probe side (18i) of the first probe element (18) into contact with the inner probe side (37i) of the second probe element (37), if an inner distance shall be measured on the workpiece (20) or in order to bring the outer probe side (18a) of the first probe element (18) into contact with the outer probe side (37a) of the second probe element (37), if an outer distance on the workpiece (20) shall be measured,
- Determining a reference plane (B) orientated orthogonal to the probing direction (x) by using one single contact point in space at the point of contact of the probe elements (18, 37), if the first probe signal (T1) and/or the second probe signal (T2) indicates that the two probe elements (18, 37) are in contact,
- Determining a length measurement value on the workpiece (20) after determination of the reference plane (B) based on the distances of the probe elements (18, 37) from the reference plane (B) during probing of the workpiece (20).

2. Measuring device according to claim 1, **characterized in that** the control unit (30) is configured to request whether an inner distance between two workpiece surfaces facing one another is to be measured in the probing direction (x) or whether an outer distance between two workpiece surfaces facing away from one another is to be measured in the probing direction (x) on the workpiece (20).

3. Measuring device according to claim 2, **characterized in that** the control unit (30) is configured to request the information whether an inner distance or an outer distance is to be measured in probing direction (x) on the workpiece (20) from a measuring program activated for measurement.

4. Measuring device according to any of the preceding claims, **characterized in that** at least one of the probe units (16, 35) together with the respective carrier part (15, 33) is movably supported rotatingly around the probing direction (x) and/or translationally orthogonal to the probing direction (x).

5. Measuring device according to any of the preceding claims, **characterized in that** each probe element (18, 37) is arranged on a free end of a probe insert (19, 38) of the respective probe unit (16, 35) or is realized by the free end of the probe insert (19, 38).

6. Measuring device according to claim 5, **characterized in that** the probe insert (19, 38) extends in a pin-shaped manner up to the probe element (18, 37) and is connected with a probe head (17, 36) by means of its end opposite the probe element (18, 37).

7. Measuring device according to claims 5 and 6, **characterized in that** the probe head (17, 36) is configured to detect a force applied on the probe element (18, 37) and/or a deflection of the probe element (18, 37) from a rest position.

8. Measuring device according to any of the preceding claims, **characterized in that** an interferometer arrangement (25) is assigned to each carrier part (15, 33) respectively comprising a laser interferometer (26) arranged on the carrier part (15, 33) or on the machine base (11) that is configured to emit at least one laser measuring beam (L1, L2) in the probing direction (x) towards an assigned reflector (27) respectively and to receive the laser measuring beam (L1, L2) reflected on the reflector (27), wherein the reflector (27) is arranged on the machine base (11), if the laser interferometer (26) is arranged on the carrier part (15, 33) and wherein the reflector (27) is arranged on the carrier part (15, 33), if the laser interferometer (26) is arranged on the machine base (11).

9. Measuring device according to claim 8, **characterized in that** the at least one laser interferometer (26) transmits at least one distance signal (AS) to the control unit (30) that characterizes the distance between the laser interferometer (26) in probing direction (x) relative to the at least one reflector (27).

10. Measuring device according to claim 9, **characterized in that** the present reflectors (27) are arranged on a measuring frame (43) arranged on the machine base (11).

11. Measuring device according to any of the preceding claims, **characterized in that** two interferometer arrangements (25) are assigned to each carrier part (15, 33) respectively, wherein the laser interferometers (26) of the two interferometer arrangements (25) are each arranged at the same distance in a transverse direction (y) from a center plane (M1, M2) that is orientated orthogonal to the transverse direction (y).

12. Method for operating a measuring device (10) having a first probe unit (16) that is arranged on a first carrier part and that has a first probe element (18) having an inner probe side (18i) facing the first carrier part (15) in probing direction (x) and an outer probe side (18a) opposite the inner probe side (18i) in probing direction (x), having a second probe unit (35) that is arranged on a second carrier part (33) and that comprises a second probe element (37) having an inner probe side (37i) facing the second carrier part (33) in probing direction (x) and an outer probe side (37a) opposite the inner probe side (37i) in probing direction (x), having a first positioning arrangement (14) for positioning the first carrier part (15) relative to a machine base (11) in probing direction (x) and having a second positioning arrangement (34) for positioning the second carrier part (33) relative to the machine base (11) in the probing direction (x), comprising the following steps:
- Controlling the first positioning unit (14) and the second positioning unit (34) in order to bring the inner probe side (18i) of the first probe element (18) in contact with the inner probe side (37i) of the second probe element (37), if an inner distance shall be measured on the workpiece (20) or in order to bring the outer probe side (18a) of the first probe element (18) in contact with the outer probe side (37a) of the second probe element (37), if an outer distance shall be measured on the workpiece (20),
- Determining a reference plane (B) orientated orthogonal to the probing direction (x) by using one single contact point in space at the point of contact of the two probe elements (18, 37) when a contact between the probe elements (18, 37) has been recognized,
- Determining a length measurement value on the workpiece (20) after the determination of the reference plane (B) based on the distance of the probe elements (18, 37) from the reference plane (B) during probing of the workpiece (20).

13. Method according to claim 12, **characterized in that** the probing of the workpiece (20) by means of the probe elements (18, 37) for measuring the length measuring value on the workpiece (20) are carried out in the same orientation in probing direction (x) as the determination of the reference plane (B).

## Revendications

1. Dispositif de mesure (10),
avec une première unité de balayage (16), qui est disposée sur une première partie de support (15) et qui présente un premier élément de balayage (18), qui présente, dans une direction de balayage (x), un côté de balayage intérieur (18i) tourné vers la première partie de support (15) et un côté de balayage extérieur (18a) opposé, dans la direction de balayage (x), au côté de balayage intérieur (18i),
avec une deuxième unité de balayage (35), qui est disposée sur une deuxième partie de support (33) et qui présente un deuxième élément de balayage (37), qui présente, dans la direction de balayage (x), un côté de balayage intérieur (37i) tourné vers la deuxième partie de support (33) et un côté de balayage extérieur (37a) opposé, dans la direction de balayage (x), au côté de balayage intérieur (37i),
avec un premier ensemble de positionnement (14) qui est mis au point pour positionner la première partie de support (15) par rapport à une base de machine (11) dans une direction de balayage (x), et avec un deuxième ensemble de positionnement (34) qui est mis au point pour positionner la deuxième partie de support (33) par rapport à la base de machine (11) dans la direction de balayage (x),
dans lequel la première unité de balayage (16) est mise au point pour produire un premier signal de balayage (T1) qui indique si le premier élément de balayage (18) se trouve en contact avec un objet et dans lequel la deuxième unité de balayage (35) est mise au point pour produire un deuxième signal de balayage (T2) qui indique si le deuxième élément de balayage (37) se trouve en contact avec un objet, avec une unité de commande (30) à laquelle le premier et/ou le deuxième signal de balayage (T1, T2) sont transmis, dans lequel l'unité de commande (30) est mise au point pour piloter le premier et/ou le deuxième ensemble de positionnement (14, 34) et pour exécuter des étapes suivantes :
- de pilotage du premier et/ou du deuxième ensemble de positionnement (14, 34) pour amener en contact le côté de balayage intérieur (18i) du premier élément de balayage (18) avec le côté de balayage intérieur (37i) du deuxième élément de balayage (37) quand une distance intérieure doit être mesurée sur la pièce (20), ou pour amener en contact le côté de balayage extérieur (18a) du premier élément de balayage (18) avec le côté de balayage extérieur (37a) du deuxième élément de balayage (37) quand une distance extérieure doit être mesurée sur la pièce (20),
- de fixation d'un plan de référence (B) orienté à angle droit par rapport à la direction de balayage (x) en utilisant un unique point de contact dans l'espace sur l'emplacement de contact des éléments de balayage (18, 37) quand le premier signal de balayage (T1) et/ou le deuxième signal de balayage (T2) indiquent que les deux éléments de balayage (18, 37) sont en contact,
- de détermination d'une valeur de mesure longitudinale sur la pièce (20) après la fixation du plan de référence (B) à l'aide des espacements des éléments de balayage (18, 37) par rapport au plan de référence (B) lors du balayage de la pièce (20).

2. Dispositif de mesure selon la revendication 1, **caractérisé en ce que** l'unité de commande (30) est mise au point pour demander si un espacement intérieur entre deux surfaces de pièce tournées l'une vers l'autre ou un espacement extérieur entre deux surfaces de pièce opposées l'une à l'autre dans la direction de balayage (x) est à mesurer sur la pièce (20) dans la direction de balayage (x) .

3. Dispositif de mesure selon la revendication 2, **caractérisé en ce que** l'unité de commande (30) est mise au point pour demander l'information pour déterminer si un espace interne ou un espace externe est à mesurer sur la pièce (20) dans la direction de balayage (x) provenant d'un programme de mesure activé pour la mesure.

4. Dispositif de mesure selon l'une quelconque des revendications précédentes,
**caractérisé en ce qu'**au moins une des unités de balayage (16, 35) est montée de manière à pouvoir être déplacée par rotation autour de la direction de balayage (x) et/ou par translation à angle droit par rapport à la direction de balayage (x) conjointement avec la partie de support (15, 33) respective.

5. Dispositif de mesure selon l'une quelconque des revendications précédentes,
**caractérisé en ce que** chaque élément de balayage (18, 37) est disposé sur une extrémité libre d'un insert de balayage (19, 38) de l'unité de balayage (16, 35) respective ou est formé par l'extrémité libre de l'insert de balayage (19, 38).

6. Dispositif de mesure selon la revendication 5, **caractérisé en ce que** l'insert de balayage (19, 38) s'étend en forme de tige jusqu'à l'élément de balayage (18, 37) et est relié, par son extrémité opposée à l'élément de balayage (18, 37), à une tête de balayage (17, 36) de l'unité de balayage (16, 35).

7. Dispositif de mesure selon la revendication 5 ou 6, **caractérisé en ce que** la tête de balayage (17, 36) est mise au point pour détecter une force agissant sur l'élément de balayage (18, 37) et/ou pour détecter une déviation de l'élément de balayage (18, 37) hors d'une position de repos.

8. Dispositif de mesure selon l'une quelconque des revendications précédentes,
**caractérisé en ce qu'**est associé à chaque partie de support (15, 33) respectivement au moins un ensemble d'interféromètre (25) présentant un interféromètre à laser (26) disposé sur la partie de support (15, 33) ou sur la base de machine (11), lequel est mis au point pour émettre au moins un rayon de mesure laser (L1, L2) dans la direction de balayage (x) sur un réflecteur (27) respectivement associé et pour recevoir le rayon de mesure laser (L1, L2) réfléchi sur le réflecteur (27), dans lequel le réflecteur (27) est disposé sur la base de machine (11) quand l'interféromètre à laser (26) est disposé sur la partie de support (15, 33), et dans lequel le réflecteur (27) est disposé sur la partie de support (15, 33) quand l'interféromètre à laser (26) est disposé sur la base de machine (11).

9. Dispositif de mesure selon la revendication 8, **caractérisé en ce que** l'au moins un interféromètre à laser (26) transmet à l'unité de commande (30) au moins un signal d'espacement (AS) qui décrit l'espacement de l'interféromètre à laser (26) dans la direction de balayage (x) par rapport à l'au moins un réflecteur (27).

10. Dispositif de mesure selon la revendication 9, **caractérisé en ce que** les réflecteurs (27) présents sont disposés sur un châssis de mesure (43) disposé sur la base de machine (11).

11. Dispositif de mesure selon l'une quelconque des revendications précédentes,
**caractérisé en ce que** respectivement deux ensembles d'interféromètre (25) sont associés à chaque partie de support (15, 33), dans lequel les interféromètres laser (26) des deux ensembles d'interféromètre (25) présentent, dans une direction transversale (y) à angle droit par rapport à la direction de balayage (x), respectivement le même espacement par rapport à un plan central (M1, M2), qui est orienté à angle droit par rapport à la direction transversale (y).

12. Procédé pour faire fonctionner un dispositif de mesure (10) avec une première unité de balayage (16), qui est disposée sur une première partie de support (15) et qui présente un premier élément de balayage (18), qui présente, dans la direction de balayage (x), un côté de balayage intérieur (18i), tourné vers la première partie de support (15), et un côté de balayage extérieur (18a) opposé, dans la direction de balayage (x), au côté de balayage intérieur (18i), avec une deuxième unité de balayage (35), qui est disposée sur une deuxième partie de support (33) et qui présente un deuxième élément de balayage (37), qui présente, dans la direction de balayage (x), un côté de balayage intérieur (37i) tourné vers la deuxième partie de support (33) et un côté de balayage extérieur (37a) opposé dans la direction de balayage (x) au côté de balayage intérieur (37i), un premier ensemble de positionnement (14) pour le positionnement de la première partie de support (15) par rapport à une base de machine (11) dans la direction de balayage (x) et un deuxième ensemble de positionnement (34) pour le positionnement de la deuxième partie de support (33) par rapport à la base de machine (11) dans la direction de balayage (x), avec des étapes suivantes :
- de pilotage de la première unité de positionnement (14) et de la deuxième unité de positionnement (34) pour amener en contact le côté de balayage intérieur (18i) du premier élément de balayage (18) avec le côté de balayage intérieur (37i) du deuxième élément de balayage (37) quand un espacement intérieur doit être mesuré sur la pièce (20), ou pour amener en contact le côté de balayage extérieur (18a) du premier élément de balayage (18) avec le côté de balayage extérieur (37a) du deuxième élément de balayage (37) quand un espacement extérieur doit être mesuré sur la pièce (20),
- de fixation d'un plan de référence (B) orienté à angle droit par rapport à la direction de balayage (x) en utilisant un unique point de contact dans l'espace sur l'emplacement de contact des deux éléments de balayage (18, 37) quand un contact a été identifié entre les éléments de balayage (18, 37),
- de détermination d'une valeur de mesure longitudinale sur la pièce (20) après la fixation du plan de référence (B) à l'aide des espacements des éléments de balayage (18, 37) par rapport au plan de référence (B) lors du balayage de la pièce (20).

13. Procédé selon la revendication 12,
**caractérisé en ce que** le balayage de la pièce (20) est effectué au moyen des éléments de balayage (18, 37) pour mesurer la valeur de mesure longitudinale de la pièce (20) dans la même orientation dans la direction de balayage (x) que la fixation du plan de référence (B).
